# EUROPÄISCHE PATENTSCHRIFT

(11) **EP 3 348 150 B1**
(45) Veröffentlichungstag und Bekanntmachung des Hinweises auf die Patenterteilung: **16.11.2022**
(21) Anmeldenummer: 18151484.5
(22) Anmeldetag: 12.01.2018
(51) Int. Cl.: A23L 17/60, A23L 29/00, A23P 30/20, A23L 29/256, A23L 7/109

(54) **VERFAHREN ZUR HERSTELLUNG KALORIENARMER LEBENSMITTEILZUSAMMENSETZUNG ENTHALTEND ALGINAT**
PRODUCTION METHOD FOR LOW-CALORIE FOOD COMPOSITION CONTAINING ALGINATE
PROCÉDÉ DE PRODUCTION DE LA COMPOSITION ALIMENTAIRE À FAIBLE TENEUR EN CALORIES CONTENANT DE L'ALGINATE

(30) Priorität: 13.01.2017 DE 102017100641
(43) Veröffentlichungstag der Anmeldung: 18.07.2018
(73) Patentinhaber: Foroutan, Amir, 50933 Köln (DE)
(72) Erfinder: Foroutan, Amir, 50933 Köln (DE)
(74) Vertreter: Duda, Rafael Thomas

(56) Entgegenhaltungen:
- DE-T2- 69 520 737
- DE-U1-202016 002 176
- GB-A- 1 428 362
- JP-A- 2009 100 710
- JP-A- 2015 192 605

## Beschreibung

Die vorliegende Erfindung betrifft ein Verfahren zur Herstellung und optional Verpackung eines geformten Lebensmittelprodukts aus einer kalorienarmen Lebensmittelzusammensetzung enthaltend Alginat, Calcium und Wasser.

Die Lebensmittelzusammensetzung enthält vorzugsweise im Wesentlichen kein Mehl sowie keine Eier, sowie weniger als etwa 5 %, eines Calciumsalzes.

Die Salze der Alginsäure werden als Alginate bezeichnet. Alginate sind Polysaccharide bestehend aus den beiden Uronsäuren α-L-Guluronsäure und β-D-Mannuronsäure, die 1,4-glykosidisch zu linearen Ketten verbunden sind. Die Verwendung von Alginaten in der Lebensmittelindustrie als Gelier- und Verdickungsmittel ist grundsätzlich aus dem Stand der Technik bekannt. Zur Gelierung kommt es bei der Verwendung von Alginat durch Einlagerung von Calciumionen in die Zickzackstruktur der Guluronsäureblöcke. Alginate finden auch Verwendung in der so genannten molekularen Küche, wo sie zur Herstellung von Kunst- oder Fruchtkaviar (synthetischer Kaviar) benutzt werden. Alginsäure und ihre Salze, die Alginate werden vom Körper nicht aufgenommen, weshalb ihre Verwendung in Nahrungsmitteln lebensmittelrechtlich unbedenklich ist. In der Lebensmittelindustrie werden Alginate unter anderem in Diätprodukten verwendet.

In der EP 1 779 736 A1 wird eine Methode für die Aufbereitung von Lebensmitteln mit verlangsamter Freigabe von Nährstoffen beschrieben, bei der man raffiniertes Seetangmehl mit warmem Wasser zu einer Suspension mischt, den pH-Wert der Suspension reguliert, danach die Flüssigkeit kühlt und ein Getreidemehl zusetzt. Man erhält so eine Mischung, die sich in eine kloßartige Form kneten lässt. Man lässt die Klöße eine Zeit lang liegen und erhält ein Produkt, welches sich durch Pressen formen lässt. Man erhält so ein geformtes Lebensmittel, welches sich backen, grillen, rösten oder trocknen lässt. Vor dem Verzehr wird Calcium zugefügt, um eine verlangsamte Freigabe von Nährstoffen zu erreichen. Das zuvor beschriebene Lebensmittelprodukt lässt sich zu einer Art Nudel verarbeiten. Allerdings handelt es sich hier wie bei herkömmlichen Nudeln auch um einen Teig, der hauptsächlich aus Weizenmehl besteht und dem lediglich etwa 8 % des Alginat-haltigen Seetangmehls zugesetzt werden. Somit entstehen Nudeln, die immer noch einen vergleichsweise hohen Kaloriengehalt aufweisen.

In der JP 2015 192605 A wird ein Verfahren zur Herstellung von Nudeln aus Seetang beschrieben, bei dem eine innere Füllung mit Würzkomponenten in eine rohrförmige äußere Hülle eingefüllt wird, welche aus einem Rohmaterial auf Basis von Seetang besteht. Auf diese Weise soll ein Produkt mit einem knusprigen Äußeren und einem flüssigen oder sirupartigen Inneren erhalten werden. Die Füllung ist bereits gewürzt und so direkt zum Verzehr geeignet.

Das koreanische patent abstract 101450830 B1 beschreibt Nudeln auf Basis von Seetang, bei denen trockener Seetang eingeweicht wird und zur Reaktion gebracht wird, so dass das Alginat daraus freigesetzt wird. Anschließend wird zu der Seetanglösung Weizenmehl und gereinigtes Wasser zugesetzt, um so einen Teig herzustellen. Diesen Teig lässt man ruhen, rollt ihn zwischen Walzen zu einer flachen Form aus und schneidet den Teig dann in Streifen, so dass man Nudeln auf Basis von Seetang erhält, die getrocknet in den Handel gelangen können und anschließend vom Verbraucher vor dem Verzehr wieder wie eine herkömmliche Nudel gekocht werden, damit sie weich sind.

Hier setzt die vorliegende Erfindung ein. Die Aufgabe der vorliegenden Erfindung besteht darin, ein Verfahren zur Herstellung und optional Verpackung eines geformten Lebensmittelprodukts, hergestellt aus einer kalorienarmen Lebensmittelzusammensetzung der eingangs genannten Art zur Verfügung zu stellen, welche im Vergleich zu bekannten Lebensmittelprodukten dieser Art einen wesentlich reduzierten Kaloriengehalt aufweist und dabei ein gesundes, bekömmliches Lebensmittel mit angenehmem Geschmack darstellt.

Die Lösung dieser Aufgabe liefert ein Verfahren zur Herstellung eines geformten Lebensmittelprodukts aus einer kalorienarmen Lebensmittelzusammensetzung der eingangs genannten Gattung mit den Merkmalen des Anspruchs 1.

Erfindungsgemäß ist vorgesehen, dass man einen Gemüseextrakt, Obstextrakt, Fleischextrakt und/oder Fischextrakt und/oder mineralische Zusatzstoffe in flüssiger Form oder in Pulverform mit Wasser und Alginat sowie gegebenenfalls Aromastoffen erhitzt und das dabei erhaltene dickflüssige Gemisch in ein Wasserbad einfließen lässt, in dem ein Calciumsalz gelöst ist, wobei sich das geformte Lebensmittelprodukt ausbildet, welches man anschließend dem Wasserbad entnimmt, wobei man ein fließendes Wasserbad verwendet und das dickflüssige Gemisch in das fließende Wasserbad einfließen lässt, wobei man das dickflüssige Gemisch in das Wasserbad mit einer Fließgeschwindigkeit einfließen lässt, die in etwa der Fließgeschwindigkeit des Wasserbades entspricht.

Vorzugsweise weist die Lebensmittelzusammensetzung eine Nudelform oder eine Kugelform auf und enthält weiterhin einen aus mindestens einer Gemüsesorte oder einer Obstsorte gewonnenen Gemüse- oder Obstextrakt und/oder mineralische Zusätze. Man kann auf diese Weise ein geformtes Lebensmittelprodukt herstellen aus Wasser, Alginat als Verdickungsmittel und den Inhalts- und Geschmacksstoffen einer oder mehrere Gemüse- oder Obstsorten. Man kann auch alternativ die Lebensmittelzusammensetzung nur mit mineralischen Zusatzstoffen, beispielsweise in Pulverform anreichern, um ein gesundes Produkt mit einem höheren Mineralstoffgehalt zu erzeugen.

Gemäß einer alternativen Lösungsvariante kann man auch anstelle eines Gemüseextrakts oder Obstextrakts oder zusätzlich zu diesem einen Fischextrakt und/oder Fleischextrakt verwenden. Durch diesen alternativen Extrakt kann man ein Lebensmittel mit einer anderen Geschmacksrichtung herstellen. Dabei ist die Verwendung von Fleischextrakt und/oder Fischextrakt aus biologisch erzeugtem Fleisch und/oder Fisch bevorzugt.

Das geformte Lebensmittelprodukt hat typische Formen, wie man sie von PastaProdukten her kennt oder eine Kugelform.

Gemäß einer Variante der Erfindung kann beispielsweise bei der Herstellung des geformten kalorienarmen Lebensmittelprodukts der Gemüse- oder Obstextrakt in Form von Gemüsesaft oder Obstsaft oder in Pulverform zugegeben werden. Unter "Gemüse- oder Obstextrakt" wird im Rahmen der vorliegenden Erfindung eine Zusammensetzung verstanden, welche die Inhaltsstoffe einer oder mehrerer Gemüse- oder Obstsorten entweder vollständig oder zumindest teilweise enthält. Ein solcher "Gemüse- oder Obstextrakt" kann durch verschiedene in der Lebensmitteltechnologie angewandte Verarbeitungsschritte gewonnen werden. Beispielsweise kann man aus dem Gemüse oder Obst einen Gemüsesaft oder Obstsaft oder ein Saftkonzentrat herstellen. Oder man stellt durch Zerkleinern und anschließendes Trocknen ein Gemüsepulver oder Obstpulver her. Im einfachsten Fall kann man auch durch Zerkleinern des Gemüses und/oder Obstes eine Art Brei oder Mus herstellen und dieses entweder unmittelbar verarbeiten oder nach Trocknung weiter verarbeiten.

Der Fleischextrakt und/oder Fischextrakt kann ebenfalls beispielsweise in Pulverform oder auch in Form einer Fleischbrühe oder Fischbrühe zugegeben werden.

Vorzugsweise ist weiterhin vorgesehen, dass die kalorienarme Lebensmittelzusammensetzung neben den genannten Inhaltsstoffen weiterhin ein oder mehrere Aromastoffe enthält.

Es wurde bereits erwähnt, dass man aus der Lebensmittelzusammensetzung ein geformtes essbares Produkt herstellt, wobei insbesondere verschiedene für Nudeln oder andere Pastaprodukte bekannte Formen in Betracht kommen. Herkömmliche Pastaprodukte enthalten jedoch in der Regel immer Mehl, welches zumeist den Hauptbestandteil von Pastaprodukten oder Teigwaren bildet. Meistens enthält der für Nudeln verwendete Teig auch Eier. Folglich handelt es sich bei herkömmlichen Pastaprodukten um kohlehydratreiche und somit kalorienreiche Nahrungsmittel. Hiervon unterscheiden sich die erfindungsgemäßen Lebensmittelprodukte dadurch, dass sie bevorzugt im Wesentlichen kein Mehl sowie keine Eier enthalten und aus diesem Grunde wesentlich kalorienärmer sind. Sie bestehen vorzugsweise im Wesentlichen aus Wasser, dem Gemüseextrakt oder Obstextrakt als Geschmacksträger und Farbgebungsmittel, sowie Alginat als Verdickungs- und Formgebungsmittel, wobei letzteres ebenfalls so gut wie keine Kalorien enthält.

Eine bevorzugte Weiterbildung der Erfindung sieht vor, dass Gemüse oder Obst aus biologischem Anbau (Biogemüse, Bioobst) verwendet wird, um auf diese Weise ein gesundes Lebensmittel ohne die sonst häufig im Gemüse oder Obst vorhandenen Schadstoffe aus intensiver Landwirtschaft zu produzieren.

Gemäß der Erfindung ist vorzugsweise vorgesehen, dass die kalorienarme Lebensmittelzusammensetzung weniger als etwa 5 %, vorzugsweise weniger als etwa 3 % eines Calciumsalzes, insbesondere Calciumalginat, Calciumchlorid oder Caliumlactat enthält.

Als beispielhafte Gemüsesorten, die zur Herstellung der erfindungsgemäßen kalorienarmen Lebensmittelprodukte verwendet werden können, sind insbesondere Spinat, Tomate, Zucchini, Rote Beete oder Paprika zu nennen. Es eignet sich aber im Prinzip auch jede andere Gemüse- oder Obstsorte, für sich allein oder im Gemisch mit anderen Gemüse- oder Obstsorten. Es wurde festgestellt, dass zum Beispiel bei Verwendung von Spinat sich in Verbindung mit dem ebenfalls enthaltenen Alginat ein mineralischer, Meeresprodukten ähnlicher Geschmack ergibt.

Das Verfahren gemäß der vorliegenden Erfindung führt zu einem geformten Lebensmittelprodukt, hergestellt aus einer kalorienarmen Lebensmittelzusammensetzung der zuvor beschriebenen Art.

Gemäß einer bevorzugten Weiterbildung der Erfindung weist das kalorienarme Lebensmittelprodukt eine Nudelform oder Pastaform oder eine Kugelform auf. Im letzteren Fall kann man zum Beispiel ein geformtes Lebensmittelprodukt herstellen, welches ein ähnliches Aussehen hat wie Kaviar.

Bei dem Verfahren zur Herstellung eines geformten Lebensmittelprodukts der zuvor genannten Art tritt bei Eintritt der Alginat-haltigen Zusammensetzung in das Wasserbad eine Abkühlung ein, die Masse geliert und bildet beispielsweise längliche nudelartige Formen aus.

Gemäß der Erfindung verwendet man ein fließendes Wasserbad und lässt das dickflüssige Gemisch in das fließende Wasserbad einfließen, vorzugsweise mit einer Fließgeschwindigkeit, die in etwa der Fließgeschwindigkeit des Wasserbades entspricht. Auf diese Weise gelingt es besonders gut, aus der in das Wasserbad eintretenden Masse längliche nudelartige Formen zu bilden, die dann anschließend abgeschöpft, abgesiebt oder auf andere geeignete Weise aus dem Wasserbad entnommen werden können.

Gemäß einer Weiterbildung der Erfindung ist es vorteilhaft, wenn man zur Erzielung einer Nudelform das dickflüssige Gemisch in einem Strahl in das Wasserbad einfließen lässt oder man zur Erzielung einer Kugelform das dickflüssige Gemisch in Tropfenform in das Wasserbad einfließen lässt.

Gemäß einer Weiterbildung der Erfindung ist es vorteilhaft, wenn man zur Erzielung einer länglichen Nudelform das dickflüssige Gemisch in ein Wasserbad in einem Gefäß mit einer in Fließrichtung des Wasserbads gesehen rinnenartigen oder muldenförmigen Struktur bevorzugt etwa im Bodenbereich einfließen lässt.

Vorzugsweise verpackt man das dem Wasserbad entnommene geformte Lebensmittelprodukt gegebenenfalls vor Konservierung noch feucht. Anders als bei herkömmlichen Pastaprodukten wird somit nicht unbedingt ein Trockenprodukt hergestellt, welches vor dem Verzehr zwingend zunächst einen Kochvorgang erfordert. Da die erfindungsgemäßen Produkte ("Alginatnudeln") anders als herkömmliche Hartweizenpasta weich sind, ist es durchaus auch möglich, die erfindungsgemäßen Lebensmittelprodukte, so wie sie in den Handel gelangen, d.h. unmittelbar nach der Entnahme aus der Verpackung zu verzehren. Aber diese können alternativ auch gekocht, gebraten, frittiert, gegrillt werden oder dergleichen. Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine schematisch vereinfachte Ansicht einer Vorrichtung zur Herstellung von Lebensmitteln in Nudelform gemäß einer beispielhaften Ausführungsvariante der vorliegenden Erfindung;
Figur 2 eine Schnittansicht der Vorrichtung entlang der Schnittlinie II-II von Figur 1;

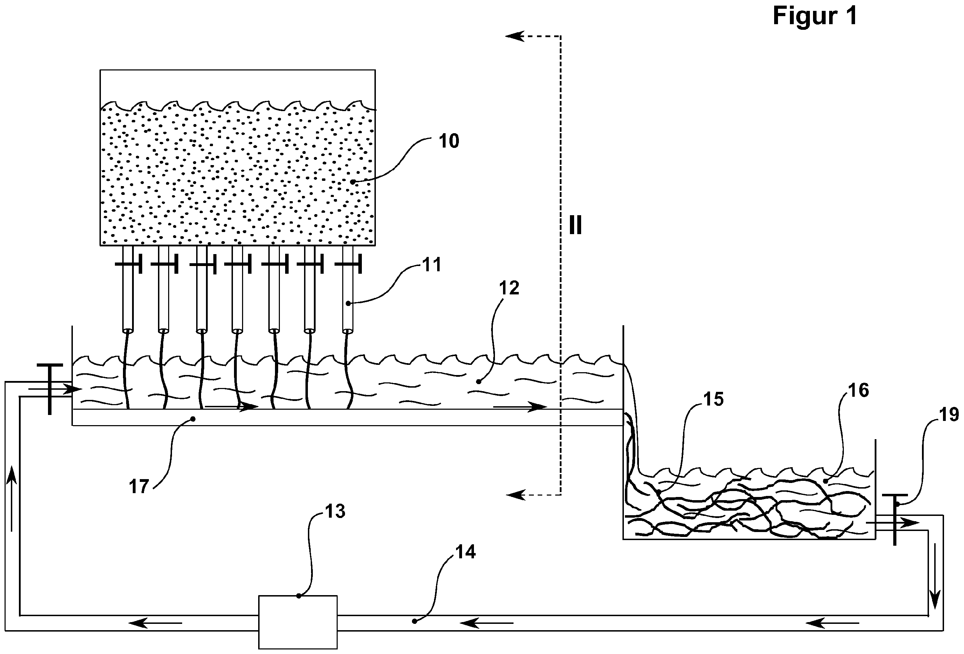

Zunächst wird auf die Figur 1 Bezug genommen und anhand dieser schematisch vereinfachten Darstellung wird die Herstellung eines beispielhaften erfindungsgemäßen Lebensmittelprodukts auf Alginatbasis gemäß der vorliegenden Erfindung näher erläutert. Die Vorrichtung umfasst einen Behälter 10, in dem ein Gemisch aus einem Gemüseextrakt, z.B. in Püree- oder Pulverform, bevorzugt unter Verwendung von Biogemüse bei erhöhter Temperatur, vorzugsweise in kochendem Wasser gemischt und mittels einer Rühr- oder Mischvorrichtung eine Zeit lang mit ausreichender Geschwindigkeit gerührt wird, beispielsweise für die Zeitdauer von ca. 1 Stunde. Anschließen wird das Alginat in einer Menge von zwischen etwa 1,1 und etwa 2,5 % bezogen auf das Volumen der Mischung zugefügt und es wird weiter bei erhöhter Temperatur gut gerührt, beispielsweise für eine weitere Zeitdauer von 1 bis 2 Stunden. Gegebenenfalls werden nach einiger Zeit noch Aromastoffe zugefügt. Das so erhaltene Gemisch hat eine etwa sirupartige Konsistenz.

Von dem Behälter 10 aus erstrecken sich unterseitig eine Reihe von Rohren 11, die parallel und mit Abstand zueinander angeordnet sein können. Unterhalb des Behälters 10 befindet sich ein Wasserbad 12, in dem sich eine Lösung eines Calciumsalzes wie beispielsweise Calciumchlorid in Wasser befindet, beispielsweise mit einer Konzentration von etwa 1,1 bis etwa 2,4 Gew.% des Salzes in Wasser. Alternativ kann beispielsweise Calciumlactat in dem Wasserbad 12 gelöst sein.

Nun lässt man durch Öffnen von Hähnen oder Ventilen über die Rohre 11 das dickflüssige Gemisch aus dem Behälter 10 in das Wasserbad 12 einfließen. Wenn man einen kontinuierlichen Flüssigkeitsstrom aus den Rohren 11 ausfließen lässt, kommt es bei Eintreffen des Gemischs in das im Vergleich zu dem Gemisch bevorzugt kühlere Wasserbad 12, welches beispielsweise handwarm ist, zu einer Reaktion des Alginats mit dem im Wasserbad gelösten Calciumsalz und das Gemisch verfestigt sich in dem Wasserbad, wobei sich langgestreckte Stränge des Lebensmittelprodukts ausbilde. Dabei ist es von Vorteil, wenn die Lösung in dem Wasserbad in Pfeilrichtung fließt, wozu man eine Pumpe 13 in der Leitung 14 verwendet, mittels derer man die Lösung im Wasserbad im Kreislauf pumpt. Empirisch wurde festgestellt, dass es besonders vorteilhaft ist, wenn die Lösung im Wasserbad 12 etwa mit der gleichen Geschwindigkeit strömt, wie die dickflüssige Mischung, die aus den Rohren 11 in das Wasserbad einfließt. Über Hähne 19 oder Ventile kann man die Strömung der Flüssigkeit im Kreislauf aus dem Wasserbad heraus und in das Wasserbad 12 hinein bei Bedarf steuern.

Die sich in dem Wasserbad ausbildenden langen Stränge 15 des Lebensmittelprodukts werden mit dem Wasserbad in Fließrichtung weiter gefördert und gelangen dann in einen Behälter 16, der als Auffangbecken dient, aus dem sie dann entnommen werden können. Da die Konzentration des Calciumsalzes durch den Verbrauch bei der Ausbildung des geformten Produkts mit der Zeit abnimmt, wird von Zeit zu Zeit Calciumsalz in das Wasserbad 12 nachgegeben.

Wenn man das dickflüssige Gemisch aus dem Behälter 10 nicht kontinuierlich in das Wasserbad 12 einfließen lässt, sondern tropfenweise, bildet sich anstelle der zuvor beschriebenen langgestreckten Nudelform eine Kugelform des Produkts aus.

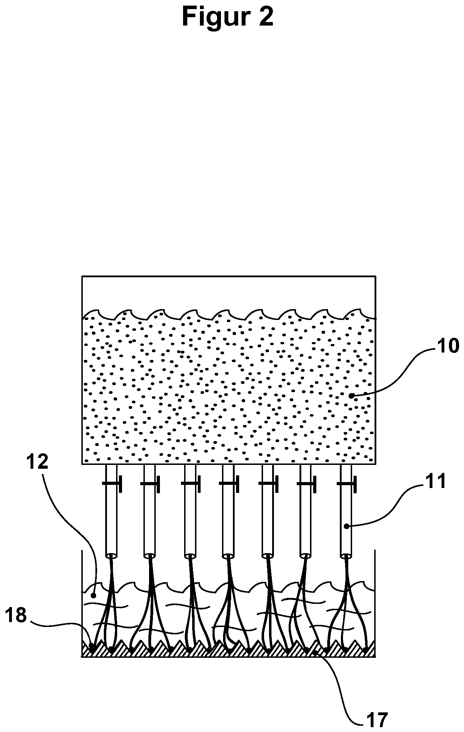

Nachfolgend wird auf Figur 2 Bezug genommen, die einen Querschnitt entlang der Linie II-II von Figur 1 zeigt, so dass man von vorn auf den Behälter 10 schaut. In dieser Ansicht kann man gut erkennen, dass der Bodenbereich 17 strukturiert ist, derart, dass dort zahlreiche Mulden 18 mit Erstreckung in Längsrichtung (Fließrichtung des Wasserbads) ausgebildet sind, ähnlich einer Wellblechform, so dass das von oben her in das Wasserbad einfließende Produkt dort geformt wird und sich in den Vertiefungen der Mulden langgestreckte Stränge des Produkts ausbilden. Verwendet man gemäß einem Beispiel der vorliegenden Erfindung Spinat als Gemüse und gibt dem Gemisch Natriumalginat und Kochsalz zu, dann wird ein Lebensmittelprodukt mit einem Geschmack erhalten, der demjenigen von Meeresalgen bzw. Kaviar ähnelt. Die Zugabe von Kochsalz kann auch später beim Verzehr des Produkts erfolgen. Stellt man alternativ wie oben beschrieben durch Eintropfen lassen kugelförmige Produkte her, dann ähneln diese auch von der Form her Kaviar. Durch Zugabe anderer Gemüse- oder Obstsorten lassen sich Geschmack und Farbe der Lebensmittelprodukte quasi beliebig variieren. Durch Zugabe diverser Mineralien bei der Herstellung des Gemisches kann man die Werthaltigkeit des Lebensmittelprodukts unter ernährungswissenschaftlichen Gesichtspunkten erhöhen. Gegebenenfalls kann man auch ein Produkt herstellen, bei dem man völlig auf einen Gemüseextrakt, Obstextrakt, Fleischextrakt oder Fischextrakt verzichtet und stattdessen das Alginat nur mit einer Mineralstoffmischung anreichert. In diesem Fall lässt man quasi den Geschmacksträger weg, arbeitet aber ansonsten bezüglich der Rezeptur und des Verfahrens zur Herstellung des Lebensmittels in der gleichen Weise wie oben beschrieben.

### Bezugszeichenliste

- 10: Behälter
- 11: Rohre
- 12: Wasserbad
- 13: Pumpe
- 14: Leitung
- 15: Stränge
- 16: Behälter/Auffangbecken
- 17: Bodenbereich
- 18: Mulden
- 19: Hähne

## Patentansprüche

1. Verfahren zur Herstellung und optional Verpackung eines geformten Lebensmittelprodukts aus einer kalorienarmen Lebensmittelzusammensetzung, **dadurch gekennzeichnet, dass** man einen Gemüseextrakt, Obstextrakt, Fleischextrakt und/oder Fischextrakt in flüssiger Form oder in Pulverform mit Wasser und Alginat sowie gegebenenfalls Aromastoffen erhitzt und das dabei erhaltene dickflüssige Gemisch in ein Wasserbad (12) einfließen lässt, in dem ein Calciumsalz gelöst ist, wobei sich das geformte Lebensmittelprodukt (15) ausbildet, welches man anschließend dem Wasserbad entnimmt, wobei man ein fließendes Wasserbad (12) verwendet und das dickflüssige Gemisch in das fließende Wasserbad (12) einfließen lässt, wobei man das dickflüssige Gemisch in das Wasserbad (12) mit einer Fließgeschwindigkeit einfließen lässt, die in etwa der Fließgeschwindigkeit des Wasserbades entspricht.

2. Verfahren zur Herstellung eines geformten Lebensmittelprodukts nach Anspruch 1, **dadurch gekennzeichnet, dass** man zur Erzielung einer Nudelform das dickflüssige Gemisch in einem Strahl in das Wasserbad (12) einfließen lässt oder man zur Erzielung einer Kugelform das dickflüssige Gemisch in Tropfenform in das Wasserbad einfließen lässt.

3. Verfahren zur Herstellung eines geformten Lebensmittelprodukts nach einem der Ansprüche 1 oder 2, **dadurch gekennzeichnet, dass** man zur Erzielung einer länglichen Nudelform das dickflüssige Gemisch in ein Wasserbad in einem Gefäß mit einer in Fließrichtung des Wasserbads gesehen rinnenartigen oder muldenförmigen Struktur (18) im Bodenbereich (17) einfließen lässt.

4. Verfahren zur Herstellung eines geformten Lebensmittelprodukts nach einem der Ansprüche 1 bis 3, **dadurch gekennzeichnet, dass** man das dem Wasserbad (12) entnommene geformte Lebensmittelprodukt (15) gegebenenfalls vor Konservierung feucht verpackt.

5. Verfahren zur Herstellung eines geformten Lebensmittelprodukts nach einem der Ansprüche 1 bis 4, **dadurch gekennzeichnet, dass** die Lebensmittelzusammensetzung , aus der das geformte Lebensmittelprodukt hergestellt wird, im Wesentlichen kein Mehl sowie keine Eier enthält und diese weniger als etwa 5 %, eines Calciumsalzes enthält.

6. Verfahren nach Anspruch 5, **dadurch gekennzeichnet, dass** bei der Herstellung der Gemüseextrakt, Obstextrakt, Fleischextrakt oder Fischextrakt in Form von Gemüse- und/oder Obstsaft, Fleischbrühe oder Fischbrühe oder in Pulverform zugegeben wird.

7. Verfahren nach einem der Ansprüche 5 oder 6, **dadurch gekennzeichnet, dass** die Lebensmittelzusammensetzung , aus der das geformte Lebensmittelprodukt hergestellt wird, weniger als 3 % eines Calciumsalzes, insbesondere Calciumalginat oder Calciumchlorid oder Calcium lactat enthält.

8. Verfahren nach einem der Ansprüche 5 bis 7, **dadurch gekennzeichnet, dass** der zur Herstellung verwendete Gemüse- und/oder Obstextrakt als Gemüsesorte wenigstens eine Gemüsesorte ausgewählt aus Spinat, Tomate, Zucchini, Rote Beete und Paprika enthält.

## Claims

1. A method for the production and optional packaging of a shaped food product from a low calorie food composition, **characterized in that** a vegetable extract, fruit extract, meat extract and/or fish extract in the liquid form or in a powder form is heated with water and alginate as well as optional flavourings and the viscous mixture which is obtained thereby is allowed to flow into a water bath (12) in which a calcium salt has been dissolved, wherein the shaped food product (15) is formed which is then removed from the water bath, wherein a flowing water bath (12) is used and the viscous mixture is allowed to flow into the flowing water bath (12), wherein the viscous mixture is allowed to flow into the water bath (12) at a flow rate which approximately corresponds to the flow rate of the water bath.

2. The method for the production of a shaped food product as claimed in claim 1, **characterized in that** in order to obtain a noodle shape, the viscous mixture is allowed to flow into the water bath (12) in a jet or in order to obtain a spherical shape, the viscous mixture is allowed to flow into the water bath in the form of droplets.

3. The method for the production of a shaped food product as claimed in claim 1 or claim 2, **characterized in that** in order to obtain an elongated noodle shape, the viscous mixture is allowed to flow into a water bath in a vessel with a structure (18) in the bottom region (17) which is serrated or valley-shaped as seen in the direction of flow of the water bath.

4. The method for the production of a shaped food product as claimed in one of claims 1 to 3, **characterized in that** the shaped food product (15) which is removed from the water bath (12) is optionally wet packed prior to preservation.

5. The method for the production of a shaped food product as claimed in one of claims 1 to 4, **characterized in that** the food composition from which the shaped food product is produced contains substantially no flour as well as no eggs and it contains less than approximately 5 % of a calcium salt.

6. The method as claimed in claim 5, **characterized in that** during the production, the vegetable extract, fruit extract, meat extract or fish extract is added in the form of vegetable juice and/or fruit juice, meat stock or fish stock or in the form of a powder.

7. The method as claimed in claim 5 or claim 6, **characterized in that** the food composition from which the shaped food product is produced contains less than 3 % of a calcium salt, in particular calcium alginate or calcium chloride or calcium lactate.

8. The method as claimed in one of claims 5 to 7, **characterized in that** the vegetable and/or fruit extract used for the production contains, as the vegetable variety, at least one vegetable variety selected from spinach, tomato, zucchini, beetroot and paprika.

## Revendications

1. Procédé permettant de fabriquer, et optionnellement d'emballer, un produit alimentaire mis en forme à partir d'une composition alimentaire peu calorique, **caractérisé en ce que** l'on chauffe un extrait de légumes, extrait de fruits, extrait de viande et/ou extrait de poisson sous forme liquide ou sous une forme pulvérulente en y ajoutant de l'eau, de l'alginate et éventuellement des arômes, pour ensuite introduire le mélange visqueux ainsi obtenu dans un bain d'eau (12) dans lequel un sel de calcium a été dissous, et obtenir le produit alimentaire (15) mis en forme que l'on retire alors du bain d'eau, le bain d'eau (12) utilisé se trouvant dans un état d'écoulement et ledit mélange visqueux étant introduit dans le bain d'eau se (12) trouvant dans un état d'écoulement, la vitesse d'écoulement avec laquelle on introduit le mélange visqueux dans le bain d'eau (12) étant environ égale à la vitesse d'écoulement dudit bain d'eau.

2. Procédé de fabrication d'un produit alimentaire mis en forme selon la revendication 1, **caractérisé en ce que** ledit mélange visqueux est introduit dans le bain d'eau (12) sous forme d'un jet afin d'obtenir une forme de pâte alimentaire ou bien que ledit mélange visqueux est introduit dans le bain d'eau sous forme de gouttes afin d'obtenir une forme sphérique.

3. Procédé de fabrication d'un produit alimentaire mis en forme selon l'une des revendications 1 ou 2, **caractérisé en ce que** l'on introduit ledit mélange visqueux dans un bain d'eau au sein d'un récipient dont le fond (17) est pourvu d'une structure (18) qui est constituée, en regardant dans le sens de l'écoulement, de cavités ou de creux, pour ainsi obtenir des pâtes alimentaire d'une forme allongée.

4. Procédé de fabrication d'un produit alimentaire mis en forme selon l'une des revendications 1 à 3, **caractérisé en ce que** le produit alimentaire (15) mis en forme est, suite à son retrait du bain d'eau (12), emballé à l'état humide, pour ensuite éventuellement subir un processus de conservation.

5. Procédé de fabrication d'un produit alimentaire mis en forme selon l'une des revendications 1 à 4, **caractérisé en ce que** la composition alimentaire, à partir de laquelle le produit alimentaire mis en forme est fabriqué, contient sensiblement pas de farine ni d'œufs et qu'elle contient moins d'environ 5 % d'un sel de calcium.

6. Procédé selon la revendication 5, **caractérisé en ce que** lors de la fabrication, l'extrait de légumes, l'extrait de fruits, l'extrait de viande ou l'extrait de poisson est ajouté sous forme de jus de légumes et/ou de fruits, de bouillon de viande ou bouillon de poisson ou bien sous une forme pulvérulente.

7. Procédé selon l'une des revendications 5 ou 6, **caractérisé en ce que** la composition alimentaire, à partir de laquelle le produit alimentaire mis en forme est fabriqué, contient moins de 3 % d'un sel de calcium, s'agissant notamment d'alginate de calcium ou de chlorure de calcium ou de lactate de calcium.

8. Procédé selon l'une des revendications 5 à 7, **caractérisé en ce que** l'extrait de légumes et/ou de fruits qui est utilisé dans la fabrication contient, en tant que variété de légume, au moins une variété de légume choisie parmi les épinards, la tomate, la courgette, la betterave rouge et le poivron.
